# EUROPEAN PATENT SPECIFICATION

(11) **EP 4 492 639 B1**
(45) Date of publication and mention of the grant of the patent: **25.03.2026**
(21) Application number: 24169650.9
(22) Date of filing: 11.04.2024
(51) Int. Cl.: H02K 1/278

(54) **COMPRESSOR MOTOR AND COMPRESSOR INCLUDING THE SAME**
VERDICHTERMOTOR UND VERDICHTER DAMIT
MOTEUR DE COMPRESSEUR ET COMPRESSEUR LE COMPRENANT

(30) Priority: 12.07.2023 KR 20230090543
(43) Date of publication of application: 15.01.2025
(73) Proprietor: LG Electronics Inc., Yeongdeungpo-gu Seoul 07336 (KR)
(72) Inventor: REU, Jinwook, 08592 Seoul (KR); JANG, Daekyu, 08592 Seoul (KR); HA, Kyungho, 08592 Seoul (KR); CHOI, Hyeonnyeong, 08592 Seoul (KR)
(74) Representative: Vossius & Partner Patentanwälte Rechtsanwälte mbB

(56) References cited:
- EP-B1- 1 050 097
- JP-A- 2009 072 015
- US-B2- 9 735 638

## Description

### TECHNICAL FIELD

The present disclosure relates to a compressor motor and a compressor including the same. More specifically, the present disclosure relates to a compressor motor for improving a back electromotive force and a compressor including the same.

### BACKGROUND

In general, a compressor refers to a device that is configured to receive power from a power generator such as a motor or a turbine and compress a working fluid such as air or refrigerant. More specifically, the compressors are widely used in the whole industry or home appliances, such as for a steam compression refrigeration cycle (hereinafter, referred to as "refrigeration cycle").

The compressors may be classified into a reciprocating compressor, a rotary compressor, and a scroll compressor depending on a method of compressing the refrigerant.

The reciprocating compressor uses a method in which a compression space is formed between a piston and a cylinder, and the piston linearly reciprocates to compress a fluid. The rotary compressor uses a method of compressing a fluid by a roller that eccentrically rotates inside a cylinder. The scroll compressor uses a method of compressing a fluid by engaging and rotating a pair of spiral scrolls.

The reciprocating compressor also uses a method in which a crankshaft is coupled to a rotor of a motor, a connecting rod is coupled to the crankshaft, and the piston coupled to the connecting rod compresses refrigerant while linearly reciprocating inside the cylinder.

Recently, among the reciprocating compressors, the use of linear compressors that uses a linear reciprocating motion without using the crankshaft is gradually increasing. The linear compressor has advantages in that it has less mechanical loss resulting from converting a rotational motion into the linear reciprocating motion and thus can improve efficiency of the compressor, and has a relatively simple structure.

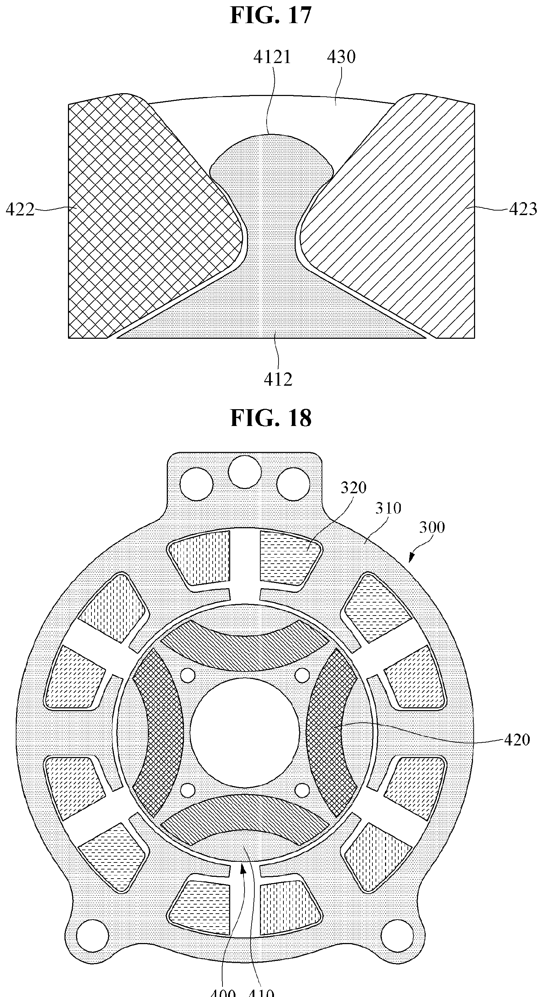

FIG. 18 is a cross-sectional view of a motor according to a related art.

Referring to FIG. 18, a reciprocating compressor according to a related art may use interior permanent magnet (IPM) motors 300 and 400 in which a magnet 420 is inserted into the rotor 400.

Specifically, the motors 300 and 400 may include a stator 300 including a stator part 310 and a coil 320 wound around the stator part 310, and a rotor 400 including a rotor core 410 disposed inside the stator 300 and coupled to a shaft and a magnet 420 inserted into the rotor core 410.

However, the IPM motor had a problem in that a motor excitation force increased and a back electromotive force decreased compared to a surface-mounted permanent magnet (SPM) motor in which a magnet is mounted on a surface of a rotor.

### [Prior Art Documents]

(Patent Document 1) Korean Patent Application Publication No. 10-2015-0067898 Patent documents EP 1 050 097 B1, JP 2009 072015 A and US 9 735 638 B2 also represent related art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. An object of the present disclosure is to provide a compressor motor capable of reducing a motor excitation force and improving a back electromotive force and a compressor including the same.

Another object of the present disclosure is to provide a compressor motor capable of reducing manufacturing cost of a rotor and a compressor including the same.

Another object of the present disclosure is to provide a compressor motor capable of compensating tolerance of a product and a compressor including the same.

Another object of the present disclosure is to provide a compressor motor capable of improving space efficiency of a rotor and a compressor including the same.

Another object of the present disclosure is to provide a compressor motor capable of improving a safety factor of a rotor and a compressor including the same.

Another object of the present disclosure is to provide a compressor motor capable of preventing a reduction in an output of the motor by maintaining a constant gap between a magnet and a stator part, and a compressor including the same.

To achieve the above-described and other objects, in one aspect of the present disclosure, there is provided a compressor motor comprising a stator and a rotor disposed inside the stator and coupled to a shaft.

In this case, the rotor may include a rotor core formed by axially stacking a plurality of magnetic steel plates and a plurality of magnets that is disposed on a radially outer surface of the rotor core and is spaced apart in a circumferential direction.

The rotor core may include a plurality of seating grooves in which the plurality of magnets are respectively seated, and a plurality of protrusions that protrudes radially outward between the plurality of seating grooves.

In this case, the protrusion may include both side surfaces extending radially outward and an outer peripheral surface connecting the both side surfaces in the circumferential direction. The magnet may include four surfaces extending axially, and the four surfaces may include an inner surface facing radially inward, an outer surface that is positioned opposite to the inner surface and faces an outer peripheral surface of the rotor, and two side surfaces connecting the inner surface and the outer surface.

The magnet may slide axially between adjacent protrusions of the plurality of protrusions, the inner surface of the magnet may be seated in the seating groove, and at least a portion of the side surface of the magnet may contact a side surface of the protrusion.

The side surface of the magnet may extend and protrude further radially outward than the side surface of the protrusion, and a fixing member may be disposed in at least a partial area radially outward of the outer peripheral surface of the protrusion.

Through this, the present disclosure can reduce a motor excitation force and improve a back electromotive force.

Further, the present disclosure can secure reliability of the motor by preventing the magnet from being detached from the rotor.

In addition, the present disclosure can reduce manufacturing cost of the rotor.

The fixing member may be disposed, between side surfaces of adjacent magnets of the plurality of magnets, radially further outward than the side surface of the protrusion.

The side surface of the magnet and the protrusion may contact at one point.

Through this, the present disclosure can prevent damage to the magnet generated during assembly of the rotor and improve the ease of assembly of the rotor by minimizing a contact area between the magnet and the protrusion.

A distance between the both side surfaces of the protrusion may gradually decrease as it goes radially inward from an area contacting at the one point, and an area between the side surface of the protrusion and the seating groove may be formed to be concave. At least one area of both side surfaces of the magnet may gradually increase as a distance between the both side surfaces goes radially inward, and an area between the inner surface of the magnet and the side surfaces of the magnet may be formed to be convex outward. A concave shape of the protrusion and a convex shape of the magnet may be shapes that complement each other.

The magnet and the protrusion may become far away from each other as they go radially inward from an area contacting at the one point.

Through this, the present disclosure can improve the ease of assembly of the magnet to the rotor and compensate for tolerance of the product.

An axial cross section of the magnet may have a trapezoidal shape, and an axial cross section of the protrusion may have an inverted trapezoidal shape.

In this case, both ends in the circumferential direction of the outer peripheral surface of the protrusion may be formed to be convex outward in the circumferential direction, and the side surface of the magnet may contact a convex portion of the protrusion at one point.

Through this, the present disclosure can implement one-point contact between the magnet and the protrusion.

A distance between the both side surfaces of the protrusion may gradually decrease as the protrusion comes radially inward from the both ends in the circumferential direction.

Through this, the present disclosure can improve space efficiency of the rotor.

The outer peripheral surface of the protrusion may include a groove that is concave radially inward.

Through this, the present disclosure can improve a safety factor of the fixing member by increasing a radially length of the fixing member.

An axial cross section of the groove may have a curvature.

In this case, the axial cross section of the groove may have at least two inflection points.

A radial depth of the groove may be equal to or less than 0.1 mm.

Through this, the present disclosure can secure a safety factor of the protrusion of the rotor while securing the safety factor of the fixing member.

The outer peripheral surface of the protrusion may be formed to be convex radially outward.

Through this, the present disclosure can improve the safety factor of the protrusion.

An outer diameter of the fixing member may be greater than an outer diameter of the protrusion and less than an outer diameter of the magnet.

Through this, the present disclosure can prevent a reduction in an output of the motor by maintaining a constant gap between the magnet and a stator part.

A value obtained by dividing a distance between adjacent magnets of the plurality of magnets by a minimum value of a width of the protrusion may be between 1.14 and 1.29.

Through this, the present disclosure can improve the safety factor of the rotor while improving a back electromotive force of the motor.

An outer surface of the fixing member may be formed to be convex radially outward.

Through this, the present disclosure can improve the safety factor of the fixing member.

The fixing member may be injection molded with a resin material.

To achieve the above-described and other objects, in another aspect of the present disclosure, there is provided a compressor comprising a sealed container including a sealed space, a motor disposed in the sealed container and configured to generate a rotational force, and a compression unit configured to receive the rotational force of the motor and compress a refrigerant.

The present disclosure can provide a compressor motor capable of reducing a motor excitation force and improving a back electromotive force and a compressor including the same.

The present disclosure can provide a compressor motor capable of reducing manufacturing cost of a rotor and a compressor including the same.

The present disclosure can provide a compressor motor capable of compensating tolerance of a product and a compressor including the same.

The present disclosure can provide a compressor motor capable of improving space efficiency of a rotor and a compressor including the same.

The present disclosure can provide a compressor motor capable of improving a safety factor of a rotor and a compressor including the same.

The present disclosure can provide a compressor motor capable of preventing a reduction in an output of the motor by maintaining a constant gap between a magnet and a stator part, and a compressor including the same.

### BRIEF DESCRIPTION OF THE DRAWINGS

The accompanying drawings, which are included to provide a further understanding of the present disclosure and constitute a part of the detailed description, illustrate embodiments of the present disclosure and serve to explain technical features of the present disclosure together with the description.
FIG. 1 is a cross-sectional view of a compressor according to an embodiment of the present disclosure.
FIG. 2 is a cross-sectional view of a motor according to an embodiment of the present disclosure.
FIG. 3 is a perspective view of a rotor and a fixing member according to an embodiment of the present disclosure.
FIG. 4 is a front view of a rotor and a fixing member according to an embodiment of the present disclosure.
FIG. 5 is a plan view of a rotor and a fixing member according to an embodiment of the present disclosure.
FIG. 6 is a bottom view of a rotor and a fixing member according to an embodiment of the present disclosure.
FIG. 7 is a cross-sectional view taken along A-A' of FIG. 4.
FIG. 8 is an enlarged view of a portion B of FIG. 7.
FIG. 9 is a cross-sectional view of a first protrusion according to an embodiment of the present disclosure.
FIG. 10 is a cross-sectional view of a first protrusion and a second magnet according to an embodiment of the present disclosure.
FIG. 11 is a cross-sectional view of a first protrusion, first and second magnets, and a fixing member according to an embodiment of the present disclosure.
FIG. 12 is a graph illustrating a safety factor of a protrusion and a back electromotive force of a motor depending on a value obtained by dividing a distance between adjacent magnets by a minimum value of a width of the protrusion according to an embodiment of the present disclosure.
FIGS. 13 to 15 are cross-sectional views of a first protrusion and first and second magnets according to an embodiment of the present disclosure.
FIG. 16 is a graph illustrating a safety factor of a protrusion depending on a radial depth of a groove of the protrusion of a rotor core according to an embodiment of the present disclosure.
FIG. 17 is a cross-sectional view of a first protrusion and first and second magnets which is not part of the present disclosure.
FIG. 18 is a cross-sectional view of a motor according to a related art.

### DETAILED DESCRIPTION

Reference will now be made in detail to embodiments of the present disclosure, examples of which are illustrated in the accompanying drawings. Wherever possible, the same reference numbers will be used throughout the drawings to refer to the same or like parts.

It should be understood that when a component is described as being "connected to" or "coupled to" other component, it may be directly connected or coupled to the other component or intervening component(s) may be present.

It will be noted that a detailed description of known arts will be omitted if it is determined that the detailed description of the known arts can obscure embodiments of the present disclosure. The accompanying drawings are used to help easily understand various technical features and it should be understood that embodiments presented herein are not limited by the accompanying drawings. As such, the present disclosure should be understood to extend to any alterations, and substitutes in addition to those which are particularly set out in the accompanying drawings.

In addition, a term of "disclosure" may be replaced by terms such as document, specification, description, etc.

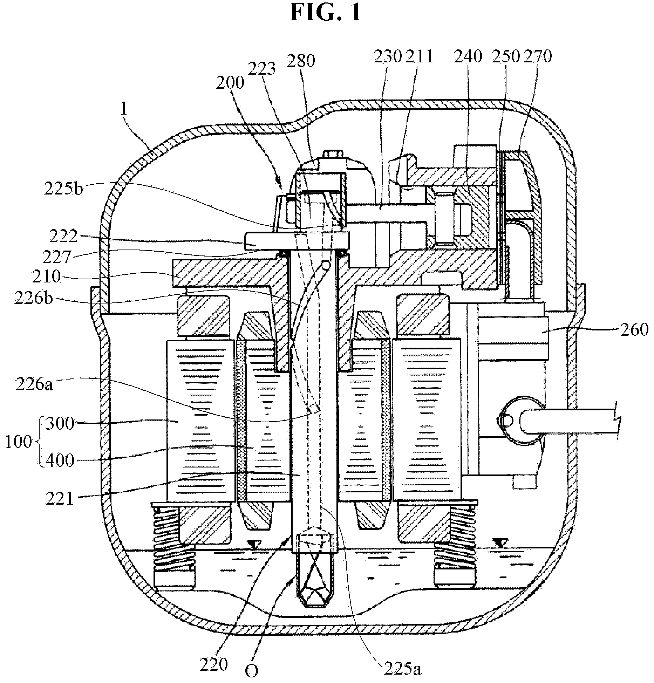

FIG. 1 is a cross-sectional view of a compressor according to an embodiment of the present disclosure.

Referring to FIG. 1, a compressor according to an embodiment of the present disclosure may include a sealed container 1, a motor 100, and a compression unit 200, but can be implemented except for some of these components and does not exclude additional components.

The sealed container 1 may form an appearance of the compressor. The motor 100 and the compression unit 200 may be disposed in the sealed container 1.

The motor 100 is installed inside the sealed container 1 and can perform a rotational motion. The motor 100 may include a constant speed motor that performs only a normal rotation, or include a constant speed motor that can perform a normal rotation and a reverse rotation, or include an inverter motor.

The motor 100 may include a stator 300 installed on a cylinder block 210 inside the sealed container 1, and a rotor 400 rotatably installed inside the stator 300.

The compression unit 200 may be installed on an upper side of the motor 100. The compression unit 200 may receive a rotational force of the motor 100 to compress a refrigerant.

The compression unit 200 may include the cylinder block 210, a crankshaft 220, a connecting rod 230, a piston 240, a valve assembly 250, an intake muffler 260, a discharge cover 270, and a discharge muffler 280.

The cylinder block 210 may include a cylinder 211 forming a compressed space. The cylinder block 210 may be elastically supported by the sealed container 1.

The crankshaft 220 may be inserted into the cylinder block 210 and supported radially and axially. The crankshaft 220 may be coupled to the rotor 400 of the motor 100 to transmit the rotational force.

The connecting rod 230 may be rotatably coupled to the crankshaft 220. The connecting rod 230 may convert a rotational motion of the crankshaft 220 into a linear motion.

The piston 240 may be rotatably coupled to the connecting rod 230. The piston 240 may linearly reciprocate in the cylinder 211. The piston 240 may compress the refrigerant.

The valve assembly 250 may be coupled to a tip of the cylinder block 210. The valve assembly 250 may include an intake valve and a discharge valve. The valve assembly 250 may include an intake muffler 260 coupled to an intake side of the valve assembly 250, a discharge cover 270 coupled to a discharge side of the valve assembly 250, and a discharge muffler 280 that communicates with the discharge cover 270 and attenuates a discharge noise of the discharged refrigerant.

In the compressor, when power is applied to the stator 300 of the motor 100, the rotor 400 may rotate together with the crankshaft 220 due to an interaction force between the stator 300 and the rotor 400, and the connecting rod 230 coupled to a pin portion 223 of the crankshaft 220 may perform a turning motion. In this case, the compressor repeats a series of processes, in which the piston 240 coupled to the connecting rod 230 compresses the refrigerant while linearly reciprocating in the cylinder 211 to discharge the refrigerant to the discharge cover 270, and the refrigerant discharged to the discharge cover 270 is discharged in a refrigeration cycle via the discharge muffler 280.

At the same time as this, an oil feeder O installed at a lower end of the crankshaft 220 pumps an oil stored in an oil reservoir of the sealed container 1 while the crankshaft 220 rotates, and the oil is sucked up through an oil passage of the crankshaft 220 and is supplied to each sliding surface, while a portion of the oil scatters from an upper end of the crankshaft 220 to cool the motor 100.

The configuration of the crankshaft 200 for sucking up the oil stored in the oil reservoir of the sealed container 1 is as follows.

The crankshaft 220 may include a shaft portion 221 that is coupled to the rotor 400, is inserted into a shaft hole of the cylinder block 210, and is supported radially by the cylinder block 210, an eccentric mass portion 222 that is eccentrically formed in a fan shape or an eccentric circular flange shape at an upper end of the shaft portion 221 to form a plate-shaped extension, and the pin portion 223 which is formed on an upper surface of the eccentric mass portion 222 to be eccentric with respect to the shaft portion 221 and into which the connecting rod 230 is rotatably inserted.

The shaft portion 221 may be configured such that a first journal bearing surface and a second journal bearing surface are formed at a predetermined interval on an outer peripheral surface corresponding to a journal bearing surface of the shaft hole.

From the lower end to the upper end of the shaft portion 221, a first oil passage 225a may be formed axially or slightly inclined axially. From the upper end of the pin portion 223 to the upper part of the shaft portion 221, a second oil passage 225b having a predetermined depth may be formed axially.

The first oil passage 225a and the second oil passage 225b may not communicate with each other.

In the middle of the first oil passage 225a, that is, in a portion corresponding to the lower half of the journal bearing surface of the shaft hole, a first oil outlet hole 226a may be formed to guide the oil to the second journal bearing surface of the crankshaft 220. A first oil groove 226b having a predetermined height from the first oil outlet hole 226a, that is, a predetermined inclination angle almost up to the end of the shaft hole may be formed in a spiral shape.

An oil inlet hole communicating with the second oil passage 225b may be formed at an end of the first oil groove 226b. In the middle of the second oil passage 225b, i.e., in a portion coupled to the connecting rod 230, a second oil outlet hole may be formed to guide the oil sucked up through the second oil passage 225b to the outer peripheral surface.

The oil pumped by the oil feeder O may be sucked up through the first oil passage 225a, and a portion of the oil may be guided to the first oil groove 226b through the first oil outlet hole 226a.

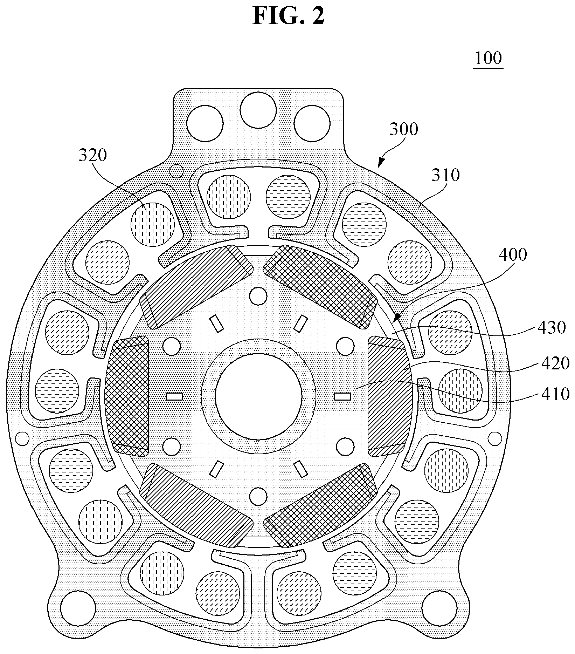

FIG. 2 is a cross-sectional view of a motor according to an embodiment of the present disclosure.

Referring to FIG. 2, the motor 100 according to an embodiment of the present disclosure may include the stator 300, the rotor 400, and a fixing member 430, but does not exclude additional components.

The stator 300 may be disposed in the sealed container 1. The stator 300 may include a stator part 310 and a coil 320 wound around the stator part 310.

The rotor 400 may be disposed inside the stator 300. The rotor 400 may be coupled to the crankshaft 220. The rotor 400 may include a rotor core 410 disposed inside the stator part 310 and coupled to the crankshaft 220, a magnet 420 disposed on a radially outer surface of the rotor core 410, and a fixing member 430 fixing the magnet 420 to the rotor core 410.

In an embodiment of the present disclosure, the motor 100 may be a surface-mounted permanent magnet (SPM) motor in which the magnet 420 is mounted on the surface of the rotor 400. In an embodiment of the present disclosure, the motor 100 is described by taking a 6-pole 9-slot motor as an example, but is not limited thereto.

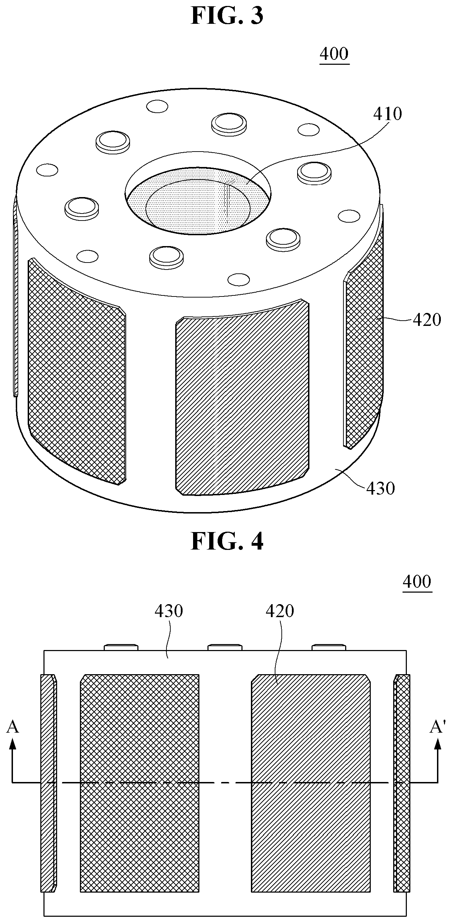

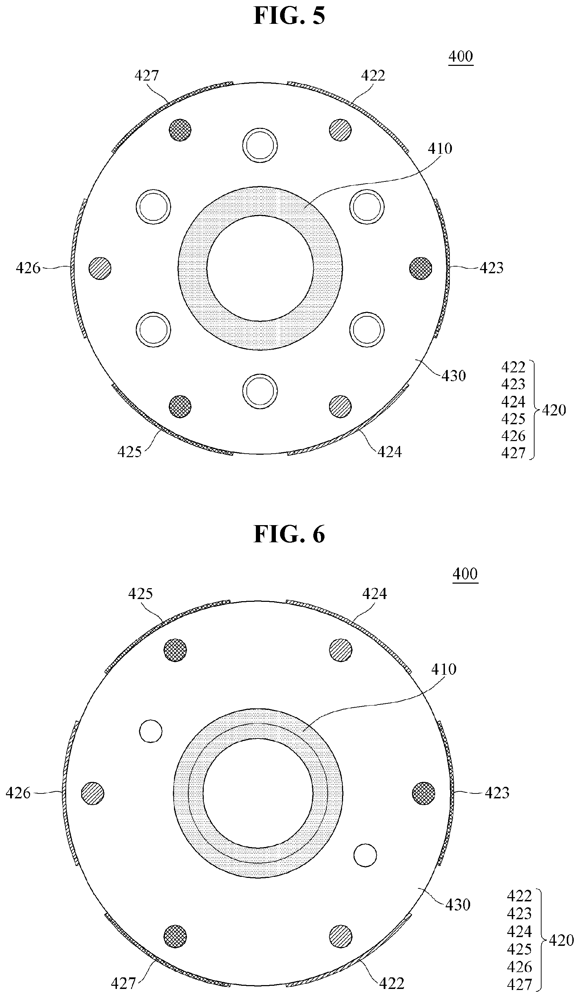

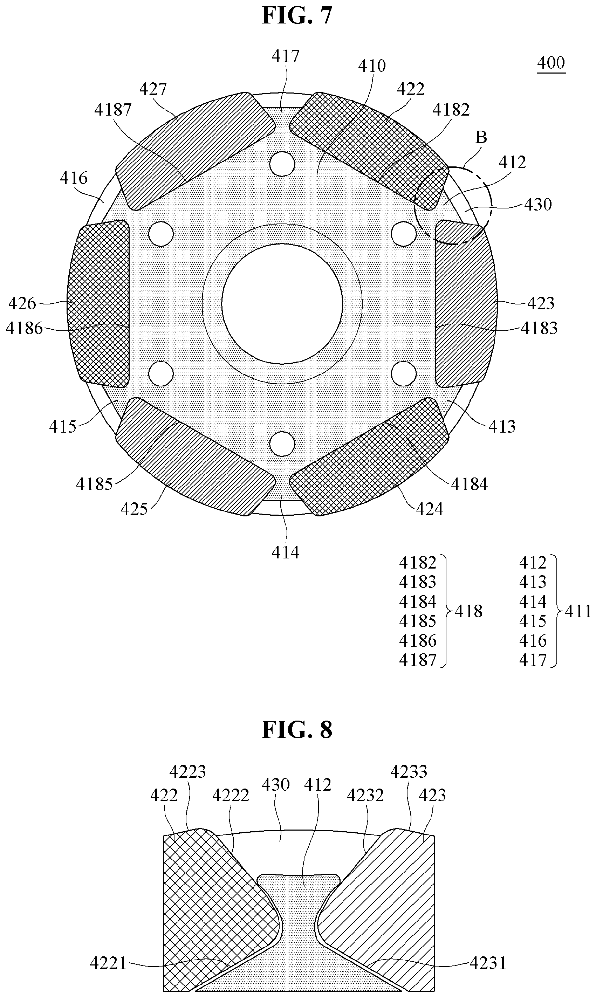

FIG. 3 is a perspective view of a rotor and a fixing member according to an embodiment of the present disclosure. FIG. 4 is a front view of a rotor and a fixing member according to an embodiment of the present disclosure. FIG. 5 is a plan view of a rotor and a fixing member according to an embodiment of the present disclosure. FIG. 6 is a bottom view of a rotor and a fixing member according to an embodiment of the present disclosure. FIG. 7 is a cross-sectional view taken along A-A' of FIG. 4.

Referring to FIGS. 3 to 7, the rotor 400 according to an embodiment of the present disclosure may include the rotor core 410 and the magnet 420, but does not exclude additional components.

The rotor core 410 may be coupled to the crankshaft 220. The rotor core 410 may be disposed inside the stator part 310. The rotor core 410 may be formed in a cylindrical shape. The rotor core 410 may include a seating groove 418 and a protrusion 411. The rotor core 410 may be formed by axially stacking a plurality of magnetic steel plates.

The seating groove 418 may be formed to be concave radially inward on an outer surface of the rotor core 410. The magnet 420 may be disposed in the seating groove 418.

The seating groove 418 may include a plurality of seating grooves 4182, 4183, 4184, 4185, 4186, and 4187 that are spaced apart from each other in a circumferential direction. A plurality of magnets 422, 423, 424, 425, 426, and 427 may be respectively disposed in the plurality of seating grooves 4182, 4183, 4184, 4185, 4186, and 4187.

The plurality of seating grooves 4182, 4183, 4184, 4185, 4186, and 4187 may include a first seating groove 4182, a second seating groove 4183, a third seating groove 4184, a fourth seating groove 4185, a fifth seating groove 4186, and a sixth seating groove 4187. The first seating groove 4182, the second seating groove 4183, the third seating groove 4184, the fourth seating groove 4185, the fifth seating groove 4186, and the sixth seating groove 4187 may be understood as having the same shape. In an embodiment of the present disclosure, the number of the plurality of seating grooves 4182, 4183, 4184, 4185, 4186, and 4187 is six, by way of example, but is not limited thereto. For example, the number of seating grooves may be variously changed depending on the number of the plurality of magnets 422, 423, 424, 425, 426, and 427.

The protrusion 411 may protrude radially outward from the outer surface of the rotor core 410. The protrusion 411 may include a plurality of protrusions 412, 413, 414, 415, 416, and 417 disposed between the plurality of seating grooves 4182, 4183, 4184, 4185, 4186, and 4187. The plurality of protrusions 412, 413, 414, 415, 416, and 417 may be spaced apart from each other in the circumferential direction. The magnet 420 may be disposed between adjacent protrusions of the plurality of protrusions 412, 413, 414, 415, 416, and 417.

The plurality of protrusions 412, 413, 414, 415, 416, and 417 may include a first protrusion 412, a second protrusion 413, a third protrusion 414, a fourth protrusion 415, a fifth protrusion 416, and a sixth protrusion 417. The first protrusion 412, the second protrusion 413, the third protrusion 414, the fourth protrusion 415, the fifth protrusion 416, and the sixth protrusion 417 may be understood as having the same shape. In an embodiment of the present disclosure, the number of the plurality of protrusions 412, 413, 414, 415, 416, and 417 is six, by way of example, but is not limited thereto. For example, the number of protrusions may be variously changed depending on the number of the plurality of magnets 422, 423, 424, 425, 426, and 427.

The magnet 420 may be disposed on the radially outer surface of the rotor core 410. The magnet 420 may be disposed in the seating groove. The magnet 420 may slide axially between adjacent protrusions of the plurality of protrusions 412, 413, 414, 415, 416, and 417 and may be seated in the seating groove 418. In the present disclosure, the axial direction (or axially) may be interpreted to mean a vertical direction based on FIG. 4.

The magnet 420 may include the plurality of magnets 422, 423, 424, 425, 426, and 427 that are spaced apart from each other in the circumferential direction. The plurality of magnets 422, 423, 424, 425, 426, and 427 may be respectively disposed in the plurality of seating grooves 4182, 4183, 4184, 4185, 4186, and 4187.

The plurality of magnets 422, 423, 424, 425, 426, and 427 may include a first magnet 422, a second magnet 423, a third magnet 424, a fourth magnet 425, a fifth magnet 426, and a sixth magnet 427. The first magnet 422, the second magnet 423, the third magnet 424, the fourth magnet 425, the fifth magnet 426, and the sixth magnet 427 may be understood as having the same shape. In an embodiment of the present disclosure, the number of the plurality of magnets 422, 423, 424, 425, 426, and 427 is six, by way of example, but the number of magnets may be variously changed depending on the specifications of the stator 300.

A separate adhesive member such as adhesive may not be interposed between the magnet 420 and the seating groove 418. That is, since the magnet 420 is slidably seated in the seating groove 418 and is fixed through the fixing member 430, the magnet 420 can be prevented from being detached from the rotor core 410. Hence, a safety factor of the rotor 400 can be improved while the ease of assembly of the rotor 400 is improved.

The fixing member 430 may fix the magnet 420 to the rotor core 410. The fixing member 430 may surround an upper surface of the rotor core 410, a lower surface of the rotor core 410, and surfaces of the plurality of magnets 422, 423, 424, 425, 426, and 427 contacting the plurality of protrusions 412, 413, 414, 415, 416, and 417. The fixing member 430 may surround radially outer surfaces of the plurality of protrusions 412, 413, 414, 415, 416, and 417, and upper surfaces and lower surfaces of the plurality of protrusions 412, 413, 414, 415, 416, and 417. That is, the fixing member 430 may surround the entire area of the rotor core 410 and the magnet 420, except for central portions of the upper surface and the lower surface of the rotor core 410 and the surface of the magnet 420 disposed radially outward.

The fixing member 430 may be double-injected with the rotor 400. The rotor 400 may be insert-molded into the fixing member 430. The fixing member 430 may be injection molded. The fixing member 430 may be formed of a plastic material. The fixing member 430 may be formed of a resin material. The fixing member 430 may be formed of polybutylene terephthalate (PBT) material. Through this, the present disclosure can prevent damage to the magnet 420 and the rotor core 410 by preventing the magnet 420 seated on an outer peripheral surface of the rotor core 410 from moving, and can prevent the magnet 420 from being detached from the rotor core 410. Further, the present disclosure can reduce the manufacturing cost of the motor 100 and prevent performance degradation of the motor 100, compared to a method of modifying the magnet 420 and fixing it to the rotor core 410 or a method of fixing the magnet 420 to the rotor core 410 through an additional coupling member. In addition, the present disclosure can reduce an excitation force of the motor 100 and increase a back electromotive force of the motor 100.

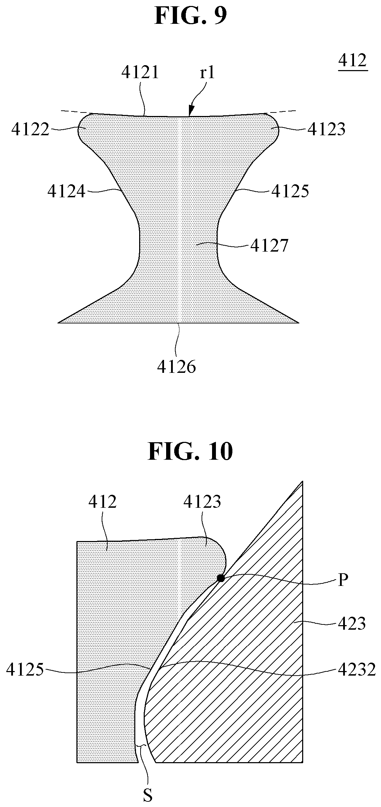

FIG. 8 is an enlarged view of a portion B of FIG. 7. FIG. 9 is a cross-sectional view of a first protrusion according to an embodiment of the present disclosure. FIG. 10 is a cross-sectional view of a first protrusion and a second magnet according to an embodiment of the present disclosure.

With reference to FIGS. 8 to 10, shapes of the protrusion 411, the magnet 420, and the fixing member 430 are described in detail. Hereinafter, the shapes are described by taking an area in which the first protrusion 412, the first magnet 422, and the second magnet 423 are disposed as an example, but it is obvious that it can be applied to the entire area of the rotor 400 and the fixing member 430.

An axial cross section of the magnet 420 may be formed in a trapezoidal shape. The magnet 420 may include four surfaces extending axially. The four surfaces of the magnet 420 may include an inner surface 4221/4231 facing radially inward, an outer surface 4223/4233 that is positioned opposite to the inner surface 4221/4231 and faces the outer peripheral surface of the rotor 400, and two side surfaces 4222/4232 connecting the inner surface 4221/4231 and the outer surface 4223/4233. The inner surfaces 4221 and 4231 of the magnet 420 may be seated in the seating groove 418. At least a portion of the side surfaces 4222 and 4232 of the magnet 420 may contact a first surface 4124 and a second surface 4125 of the protrusion 411.

An axial cross section of the protrusion 411 may be formed in an inverted trapezoidal shape to guide the magnet 420.

The first protrusion 412 may be disposed between the first magnet 422 and the second magnet 423. The fixing member 430 may be disposed between the first magnet 422 and the second magnet 423.

An axial cross section of the first protrusion 412 may include a lower surface 4126 contacting a radially outer surface of the rotor core 410, first and second surfaces 4124 and 4125 extending radially outward from the lower surface 4126, guide portions 4122 and 4123 that extend from the first and second surfaces 4124 and 4125 and are formed at both ends of the first protrusion 412 on a radially outer side of the first protrusion 412, and an outer peripheral surface 4121 that connects the guide portions 4122 and 4123 and is disposed on the radially outer side of the first protrusion 412. Here, the first and second surfaces 4124 and 4125 may be referred to as both sides of the first protrusion 412.

The guide portions 4122 and 4123 may be formed to be convex outward in the circumferential direction. Specifically, the first guide portion 4122 disposed on the left side in FIGS. 8 to 10 may be formed to be convex as it goes to the left side that is outside in the circumferential direction, and the second guide portion 4123 disposed on the right side in FIGS. 8 to 10 may be formed to be convex as it goes to the right side that is outside in the circumferential direction. The guide portions 4122 and 4123 may have a second radius of curvature r2.

In this case, the first guide portion 4122 may be in contact with the first magnet 422. The first guide portion 4122 may be in contact with the first magnet 422 at one point. Except for a contact point P where the first guide portion 4122 and the first magnet 422 contact, the first protrusion 412 and the first magnet 422 may be in non-contact.

Further, the second guide portion 4123 may be in contact with the second magnet 423. The second guide portion 4123 may be in contact with the second magnet 423 at one point. Except for a contact point P where the second guide portion 4123 and the second magnet 423 contact, the first protrusion 412 and the second magnet 423 may be in non-contact.

Through this, the present disclosure can minimize a contact area of the magnet 420 and the protrusion 411 to prevent damage to the magnet 400 that occurs when assembling the rotor 400 and to improve the ease of assembly of the rotor 400.

Referring to FIG. 10, a portion between the contact point P of the first protrusion 412, which contacts the second magnet 423 at one point, and an area adjacent to the second seating groove 4183 may be formed to be concave toward the left side that is the inside of the first protrusion 412. Further, a portion between the contact point P of the second magnet 423, which contacts the first protrusion 412 at one point, and an area adjacent to the second seating groove 4183 may be formed to be convex toward the left side that is the outside.

The second magnet 423 and the first protrusion 412 may become far away from each other as they go radially inward from the contact point P contacting at the one point. That is, based on the contact point P, a width of an area S between the second magnet 423 and the first protrusion 412 may gradually increase as it goes downward, i.e., radially inward.

Through this, the present disclosure can improve ease of assembly of the magnet 420 to the rotor 400 and compensate for product tolerances.

A width of the first protrusion 412 may gradually decrease as the first protrusion 412 comes radially inward from the guide portions 4122 and 4123 which are both ends in the circumferential direction. At least one area of both side surfaces 4222 and 4232 of the first and second magnets 422 and 423 may gradually increase as a distance between the side surfaces 4222 and 4232 goes radially inward, and an area between the side surfaces 4222 and 4232 and the inner surfaces 4221 and 4231 of the first and second magnets 422 and 423 may be formed to be convex outward. The concave shape of the first protrusion 412 and the convex shape of the first and second magnets 422 and 423 may be shapes that complement each other. Through this, the space efficiency of the rotor 400 can be improved.

That is, a distance between the first surface 4124 and the second surface 4125 may decrease as they come radially inward from the outer peripheral surface 4121. When the first and second magnets 422 and 423 go radially inward from an area closest to them, the distance between the first surface 4124 and the second surface 4125 may increase again.

The outer surface of the fixing member 430 may be formed to be convex radially outward. Through this, the safety factor of the fixing member 430 can be improved.

Based on FIGS. 8 to 10, it can be interpreted that radially outward means the upward direction, and radially inward means the downward direction.

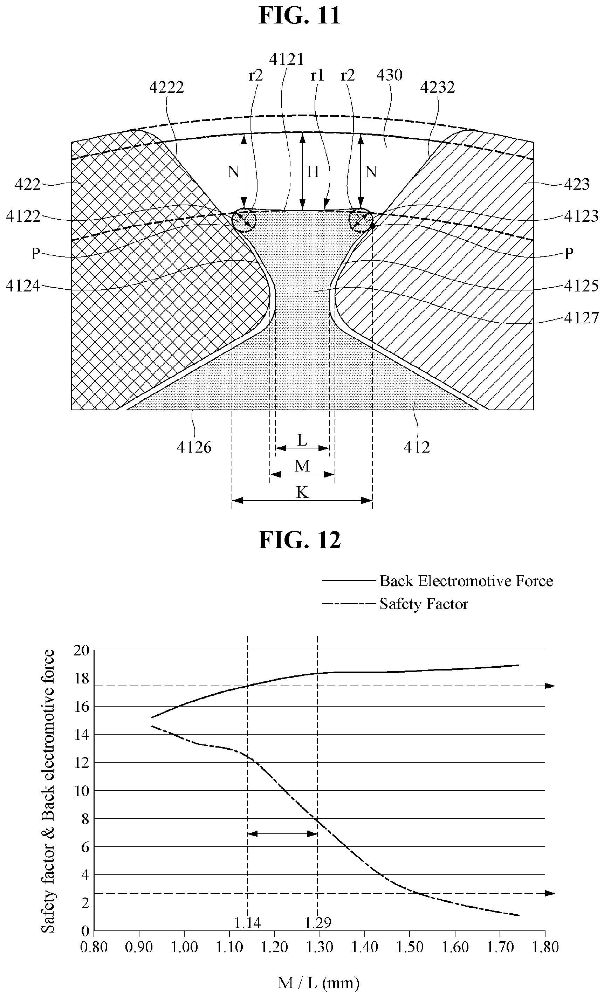

FIG. 11 is a cross-sectional view of a first protrusion, first and second magnets, and a fixing member according to an embodiment of the present disclosure. FIG. 12 is a graph illustrating a safety factor of a protrusion and a back electromotive force of a motor depending on a value obtained by dividing a distance between adjacent magnets by a minimum value of a width of the protrusion according to an embodiment of the present disclosure.

Referring to FIG. 11, the outer peripheral surface 4121 of the first protrusion 412 may be formed to be concave radially inward. The outer peripheral surface 4121 of the first protrusion 412 may have a first radius of curvature r1. Specifically, between the first magnet 422 and the second magnet 423, a width H of a central portion of the fixing member 430 may be greater than a width N of other portions. Through this, a radially length of the fixing member 430 can increase, thereby improving the safety factor of the rotor 400.

An outer diameter of the fixing member 430 may be greater than an outer diameter of the first protrusion 412 and less than outer diameters of the first and second magnets 422 and 423. Specifically, the side surfaces 4222 and 4232 of the first and second magnets 422 and 423 may extend and protrude further radially outward than the side surfaces 4124 and 4125 of the first protrusion 412, the fixing member 430 may be disposed in at least a partial area radially outward of the outer peripheral surface 4121 of the first protrusion 412, and the side surfaces 4222 and 4232 of the first and second magnets 422 and 423 may protrude further radially outward than an outer peripheral surface of the fixing member 430. Through this, the present disclosure can prevent a reduction in the output of the motor 100 by maintaining a constant gap between the magnet 420 and the stator part 310.

Referring to FIG. 12, when a value M/L obtained by dividing a distance M between the first and second magnets 422 and 423 by a minimum value L of a width of the first protrusion 412 is equal to or greater than 1.5, a safety factor of the rotor 400 is less than 2.5. Hence, the safety factor standard is not satisfied. Therefore, the value M/L obtained by dividing the distance M between the first and second magnets 422 and 423 by the minimum value L of the width of the first protrusion 412 may be less than 1.5.

When the value M/L obtained by dividing the distance M between the first and second magnets 422 and 423 by the minimum value L of the width of the first protrusion 412 is equal to or less than 1.14, a back electromotive force of the motor 100 may rapidly decrease. Hence, the output of the motor 100 may be reduced. Therefore, the value M/L obtained by dividing the distance M between the first and second magnets 422 and 423 by the minimum value L of the width of the first protrusion 412 may be greater than 1.14.

That is, it is preferable that the value M/L obtained by dividing the distance M between the first and second magnets 422 and 423 by the minimum value L of the width of the first protrusion 412 is between 1.14 1.29.

When the value M/L obtained by dividing the distance M between the first and second magnets 422 and 423 by the minimum value L of the width of the first protrusion 412 is equal to or greater than 1.29, there is no significant change in an increase rate due to saturation of the back electromotive force of the motor 100, but the safety factor of the rotor 400 is greatly reduced.

Therefore, it is more preferable that the value M/L obtained by dividing the distance M between the first and second magnets 422 and 423 by the minimum value L of the width of the first protrusion 412 is between 1.14 and 1.29. Through this, the safety factor of the rotor 400 can be improved while improving the back electromotive force of the motor 100.

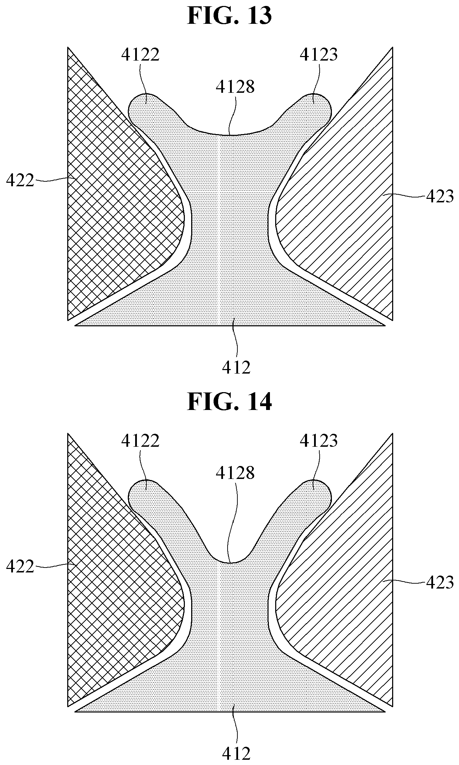

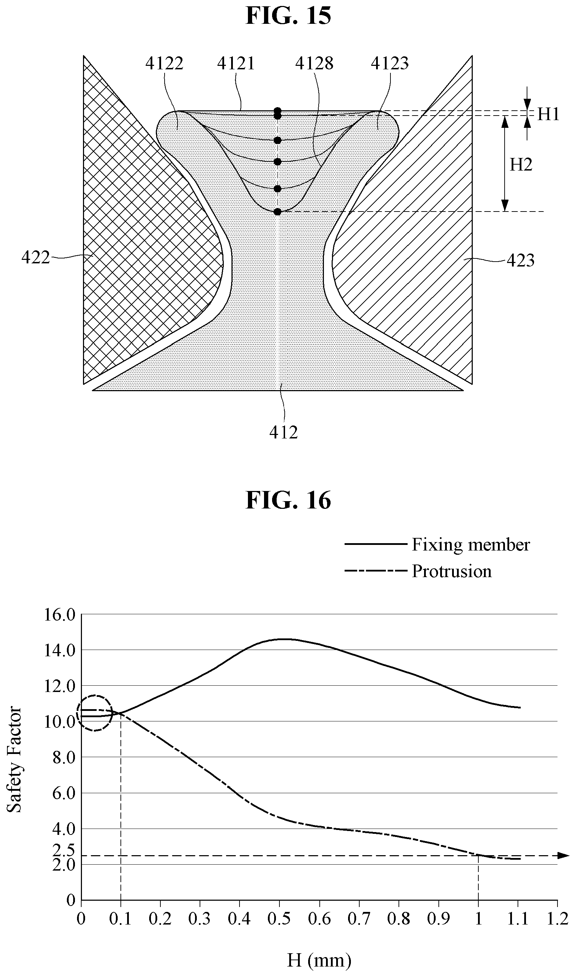

FIGS. 13 to 15 are cross-sectional views of a first protrusion and first and second magnets according to an embodiment of the present disclosure. FIG. 16 is a graph illustrating a safety factor of a protrusion depending on a radial depth of a groove of the protrusion of a rotor core according to an embodiment of the present disclosure.

Referring to FIGS. 13 to 15, the outer peripheral surface 4121 that is a radially outer surface of the first protrusion 412 may include a groove 4128 that is concave radially inward. An axia cross section of the groove 4128 may have a curvature. The axial cross section of the groove 4128 may have at least two inflection points. Through this, the safety factor of the fixing member 430 can be improved by increasing the radially length of the fixing member 430.

Referring to FIGS. 15 and 16, when radial depths H1 and H2 of the groove 4128 are equal to or greater than 0.1 mm, the safety factor of the first protrusion 412 may rapidly decrease. When the radial depths H1 and H2 of the groove 4128 are equal to or greater than 1 mm, the safety factor of the first protrusion 412 may be less than 2.5. Therefore, the safety factor standard is not satisfied. Hence, it is preferable that the radial depths H1 and H2 of the groove 4128 are equal to or less than 1 mm. Further, it is the object of this invention that the radial depths H1 and H2 of the groove 4128 are equal to or less than 0.1 mm. Through this, the safety factor of the protrusion 411 of the rotor 400 can be secured while securing the safety factor of the fixing member 430.

FIG. 17 is a cross-sectional view of a first protrusion and first and second magnets which is not part of the present disclosure.

Referring to FIG. 17, the outer peripheral surface 4121 of the first protrusion 412 may be formed to be convex radially outward. Through this, the safety factor of the first protrusion 412 can be improved.

Some embodiments or other embodiments of the present disclosure described above are not exclusive or distinct from each other. Some embodiments or other embodiments of the present disclosure described above can be used together or combined in configuration or function.

For example, configuration "A" described in an embodiment and/or the drawings and configuration "B" described in another embodiment and/or the drawings can be combined with each other. That is, even if the combination between the configurations is not directly described, the combination is possible except in cases where it is described that it is impossible to combine.

The above detailed description is merely an example and is not to be considered as limiting the present disclosure. The scope of the present disclosure is defined by the appended claims.

## Claims

1. A compressor motor used in a compressor, comprising:
a stator (300); and
a rotor (400) disposed inside the stator (300) and coupled to a shaft (220),
wherein the rotor (400) includes a rotor core (410) formed by axially stacking a plurality of magnetic steel plates and a plurality of magnets (422, 423, 424, 425, 426, 427) that is disposed on a radially outer surface of the rotor core (400) and is spaced apart in a circumferential direction,
wherein the rotor core (410) includes a plurality of seating grooves (4182, 4183, 4184, 4185, 4186, 4187) in which the plurality of magnets (422, 423, 424, 425, 426, 427) are respectively seated, and a plurality of protrusions (412, 413, 414, 415, 416, 417) that protrudes radially outward between the plurality of seating grooves (4182, 4183, 4184, 4185, 4186, 4187),
wherein the protrusion (412, 413, 414, 415, 416, 417) includes both side surfaces (4124, 4125) extending radially outward and an outer peripheral surface (4121) connecting the both side surfaces (4124, 4125) in the circumferential direction,
wherein the magnet (422, 423, 424, 425, 426, 427) includes four surfaces extending axially, and the four surfaces include an inner surface (4221, 4231) facing radially inward, an outer surface (4223, 4233) that is positioned opposite to the inner surface (4221, 4231) and faces an outer peripheral surface of the rotor (400), and two side surfaces (4222, 4232) connecting the inner surface (4221, 4231) and the outer surface (4223, 4233),
wherein the magnet (422, 423, 424, 425, 426, 427) is configured to slide axially between adjacent protrusions of the plurality of protrusions (412, 413, 414, 415, 416, 417), the inner surface (4221, 4231) of the magnet (422, 423, 424, 425, 426, 427) is seated in the seating groove (4182, 4183, 4184, 4185, 4186, 4187), and at least a portion of the side surface (4222, 4232) of the magnet (422, 423, 424, 425, 426, 427) contacts a side surface (4124, 4125) of the protrusion (412, 413, 414, 415, 416, 417),
wherein the side surface (4222, 4232) of the magnet (422, 423, 424, 425, 426, 427) extends and protrudes further radially outward than the side surface (4124, 4125) of the protrusion (412, 413, 414, 415, 416, 417), and a fixing member (430) is disposed in at least a partial area radially outward of the outer peripheral surface (4121) of the protrusion (412, 413, 414, 415, 416, 417),
**characterized in that** the outer peripheral surface (4121) of the protrusion (412, 413, 414, 415, 416, 417) includes a groove (4128) that is formed to be concaved radially inwards, and
wherein a radial depth of the groove (4128) is equal to or less than 0.1 mm.

2. The compressor motor of claim 1, wherein the fixing member (430) is disposed, between side surfaces (4222, 4232) of adjacent magnets of the plurality of magnets (422, 423, 424, 425, 426, 427), radially further outward than the side surface (4124, 4125) of the protrusion (412, 413, 414, 415, 416, 417).

3. The compressor motor of claim 1 or 2, wherein the side surface (4222, 4232) of the magnet (422, 423, 424, 425, 426, 427) and the protrusion (412, 413, 414, 415, 416, 417) contact at one point.

4. The compressor motor of claim 3, wherein a distance between the both side surfaces (4124, 4125) of the protrusion (412, 413, 414, 415, 416, 417) gradually decreases as it goes radially inward from an area (P) contacting at the one point, and an area (S) between the side surface (4124, 4125) of the protrusion (412, 413, 414, 415, 416, 417) and the seating groove (4182, 4183, 4184, 4185, 4186, 4187) is formed to be concave,
wherein at least one area of both side surfaces (4222, 4232) of the magnet (422, 423, 424, 425, 426, 427) gradually increases as a distance between the both side surfaces (4222, 4232) goes radially inward, and an area between the inner surface (4221, 4231) of the magnet (422, 423, 424, 425, 426, 427) and the side surfaces (4222, 4232) of the magnet (422, 423, 424, 425, 426, 427) is formed to be convex outward, and
wherein a concave shape of the protrusion (412, 413, 414, 415, 416, 417) and a convex shape of the magnet (422, 423, 424, 425, 426, 427) are shapes that complement each other.

5. The compressor motor of claim 3 or 4, wherein a distance between the magnet (422, 423, 424, 425, 426, 427) and the protrusion (412, 413, 414, 415, 416, 417) increases as the magnet (422, 423, 424, 425, 426, 427) and the protrusion (412, 413, 414, 415, 416, 417) move radially inward from an area (P) contacting at the one point.

6. The compressor motor of any one of claims 1 to 5, wherein an axial cross section of the magnet (422, 423, 424, 425, 426, 427) has a trapezoidal shape, and wherein an axial cross section of the protrusion (412, 413, 414, 415, 416, 417) has an inverted trapezoidal shape.

7. The compressor motor of any one of claims 3 to 5, wherein both ends (4122, 4123) in the circumferential direction of the outer peripheral surface (4121) of the protrusion (412, 413, 414, 415, 416, 417) are formed to be convex outward in the circumferential direction, and
wherein the side surface (4222, 4232) of the magnet (422, 423, 424, 425, 426, 427) contacts a convex portion of the protrusion (412, 413, 414, 415, 416, 417) at the one point.

8. The compressor motor of claim 7, wherein a distance between the both side surfaces (4124, 4125) of the protrusion (412, 413, 414, 415, 416, 417) gradually decreases as the protrusion (412, 413, 414, 415, 416, 417) moves radially inward from the both ends (4122, 4123) in the circumferential direction.

9. The compressor motor of any one of claims 1 to 8, wherein an axial cross section of the groove (4128) has a curvature.

10. The compressor motor of any one of claims 1 to 9, wherein the axial cross section of the groove (4128) has at least two inflection points.

11. The compressor motor of any one of claims 1 to 10, wherein an outer diameter of the fixing member (430) is greater than an outer diameter of the protrusion (412, 413, 414, 415, 416, 417) and is less than an outer diameter of the magnet (422, 423, 424, 425, 426, 427).

12. The compressor motor of any one of claims 1 to 11, wherein a value obtained by dividing a distance between adjacent magnets of the plurality of magnets (422, 423, 424, 425, 426, 427) by a minimum value of a width of the protrusion (412, 413, 414, 415, 416, 417) is between 1.14 and 1.29.

## Patentansprüche

1. Kompressormotor, der in einem Kompressor verwendet wird, umfassend:
einen Stator (300); und
einen Rotor (400), der innerhalb des Stators (300) angeordnet ist und mit einer Welle (220) gekoppelt ist,
wobei der Rotor (400) einen Rotorkern (410) umfasst, der durch axiales Stapeln einer Vielzahl von magnetischen Stahlplatten und einer Vielzahl von Magneten (422, 423, 424, 425, 426, 427), die auf einer radial äußeren Oberfläche des Rotorkerns (400) angeordnet ist, gebildet ist und in einer Umfangsrichtung voneinander beabstandet ist,
wobei der Rotorkern (410) eine Vielzahl von Sitznuten (4182, 4183, 4184, 4185, 4186, 4187) umfasst, in denen die Vielzahl von Magneten (422, 423, 424, 425, 426, 427) jeweils sitzt, und eine Vielzahl von Vorsprüngen (412, 413, 414, 415, 416, 417), die zwischen der Vielzahl von Sitznuten (4182, 4183, 4184, 4185, 4186, 4187) radial nach außen vorsteht,
wobei der Vorsprung (412, 413, 414, 415, 416, 417) sowohl beide Seitenflächen (4124, 4125), die radial nach außen verlaufen, als auch eine äußere Umfangsfläche (4121), die die beiden Seitenflächen (4124, 4125) in der Umfangsrichtung verbindet, umfasst,
wobei der Magnet (422, 423, 424, 425, 426, 427) vier Flächen umfasst, die axial verlaufen, und die vier Flächen eine innere Fläche (4221, 4231) umfassen, die radial nach innen gerichtet ist, eine äußere Fläche (4223, 4233), die gegenüber der inneren Fläche (4221, 4231) positioniert ist und einer äußeren Umfangsfläche des Rotors (400) zugewandt ist, und zwei Seitenflächen (4222, 4232), die die innere Fläche (4221, 4231) und die äußere Fläche (4223, 4233) verbinden,
wobei der Magnet (422, 423, 424, 425, 426, 427) dazu ausgebildet ist, axial zwischen benachbarten Vorsprüngen der Vielzahl von Vorsprüngen (412, 413, 414, 415, 416, 417) zu gleiten, die innere Fläche (4221, 4231) des Magneten (422, 423, 424, 425, 426, 427) in der Sitznut (4182, 4183, 4184, 4185, 4186, 4187) sitzt, und zumindest ein Teil der Seitenfläche (4222, 4232) des Magneten (422, 423, 424, 425, 426, 427) eine Seitenfläche (4124, 4125) des Vorsprungs (412, 413, 414, 415, 416, 417) berührt,
wobei sich die Seitenfläche (4222, 4232) des Magneten (422, 423, 424, 425, 426, 427) weiter radial nach außen erstreckt und vorsteht als die Seitenfläche (4124, 4125) des Vorsprungs (412, 413, 414, 415, 416, 417), und ein Fixierelement (430) in zumindest einem Teilbereich radial außerhalb der äußeren Umfangsfläche (4121) des Vorsprungs (412, 413, 414, 415, 416, 417) angeordnet ist,
**dadurch gekennzeichnet, dass**
die äußere Umfangsfläche (4121) des Vorsprungs (412, 413, 414, 415, 416, 417) eine Nut (4128) umfasst, die radial nach innen vertieft ausgebildet ist, und wobei eine radiale Tiefe der Nut (4128) gleich oder kleiner als 0,1 mm ist.

2. Kompressormotor nach Anspruch 1, wobei das Fixierelement (430) zwischen Seitenflächen (4222, 4232) benachbarter Magnete der Vielzahl von Magneten (422, 423, 424, 425, 426, 427) radial weiter nach außen angeordnet ist als die Seitenfläche (4124, 4125) des Vorsprungs (412, 413, 414, 415, 416, 417).

3. Kompressormotor nach Anspruch 1 oder 2, wobei die Seitenfläche (4222, 4232) des Magneten (422, 423, 424, 425, 426, 427) und der Vorsprung (412, 413, 414, 415, 416, 417) an einem Punkt miteinander in Kontakt stehen.

4. Kompressormotor nach Anspruch 3, wobei ein Abstand zwischen den beiden Seitenflächen (4124, 4125) des Vorsprungs (412, 413, 414, 415, 416, 417) sich allmählich verringert, wenn er radial nach innen von einem Bereich (P), der an dem einen Punkt in Kontakt steht, verläuft, und ein Bereich (S) zwischen der Seitenfläche (4124, 4125) des Vorsprungs (412, 413, 414, 415, 416, 417) und der Sitznut (4182, 4183, 4184, 4185, 4186, 4187) vertieft ausgebildet ist,
wobei zumindest ein Bereich der beiden Seitenflächen (4222, 4232) des Magneten (422, 423, 424, 425, 426, 427) sich allmählich vergrößert, wenn ein Abstand zwischen den beiden Seitenflächen (4222, 4232) radial nach innen verläuft, und ein Bereich zwischen der inneren Fläche (4221, 4231) des Magneten (422, 423, 424, 425, 426, 427) und den Seitenflächen (4222, 4232) des Magneten (422, 423, 424, 425, 426, 427) nach außen konvex ausgebildet ist, und
wobei eine vertiefte Form des Vorsprungs (412, 413, 414, 415, 416, 417) und eine konvexe Form des Magneten (422, 423, 424, 425, 426, 427) Formen sind, die einander ergänzen.

5. Kompressormotor nach Anspruch 3 oder 4, wobei ein Abstand zwischen dem Magneten (422, 423, 424, 425, 426, 427) und dem Vorsprung (412, 413, 414, 415, 416, 417) zunimmt, wenn der Magnet (422, 423, 424, 425, 426, 427) und der Vorsprung (412, 413, 414, 415, 416, 417) radial nach innen von einem Bereich (P), der an dem einen Punkt in Kontakt steht, verlaufen.

6. Kompressormotor nach einem der Ansprüche 1 bis 5, wobei ein axialer Querschnitt des Magneten (422, 423, 424, 425, 426, 427) eine trapezförmige Form aufweist, und
wobei ein axialer Querschnitt des Vorsprungs (412, 413, 414, 415, 416, 417) eine umgekehrte trapezförmige Form aufweist.

7. Kompressormotor nach einem der Ansprüche 3 bis 5, wobei beide Enden (4122, 4123) in der Umfangsrichtung der äußeren Umfangsfläche (4121) des Vorsprungs (412, 413, 414, 415, 416, 417) in der Umfangsrichtung nach außen konvex ausgebildet sind, und
wobei die Seitenfläche (4222, 4232) des Magneten (422, 423, 424, 425, 426, 427) an dem einen Punkt einen konvexen Abschnitt des Vorsprungs (412, 413, 414, 415, 416, 417) berührt.

8. Kompressormotor nach Anspruch 7, wobei ein Abstand zwischen den beiden Seitenflächen (4124, 4125) des Vorsprungs (412, 413, 414, 415, 416, 417) sich allmählich verringert, wenn der Vorsprung (412, 413, 414, 415, 416, 417) radial nach innen von den beiden Enden (4122, 4123) in der Umfangsrichtung verläuft.

9. Kompressormotor nach einem der Ansprüche 1 bis 8, wobei ein axialer Querschnitt der Nut (4128) eine Krümmung aufweist.

10. Kompressormotor nach einem der Ansprüche 1 bis 9, wobei der axiale Querschnitt der Nut (4128) zumindest zwei Wendepunkte aufweist.

11. Kompressormotor nach einem der Ansprüche 1 bis 10, wobei ein Außendurchmesser des Fixierelements (430) größer ist als ein Außendurchmesser des Vorsprungs (412, 413, 414, 415, 416, 417) und kleiner ist als ein Außendurchmesser des Magneten (422, 423, 424, 425, 426, 427).

12. Kompressormotor nach einem der Ansprüche 1 bis 11, wobei ein Wert, der erhalten wird, indem ein Abstand zwischen benachbarten Magneten der Vielzahl von Magneten (422, 423, 424, 425, 426, 427) durch einen Minimalwert einer Breite des Vorsprungs (412, 413, 414, 415, 416, 417) dividiert wird, zwischen 1,14 und 1,29 liegt.

## Revendications

1. Moteur de compresseur utilisé dans un compresseur, comprenant :
un stator (300) ; et
un rotor (400) disposé à l'intérieur du stator (300) et couplé à un arbre (220),
dans lequel le rotor (400) comprend un noyau de rotor (410) formé par empilement axial d'une pluralité de tôles d'acier magnétique et une pluralité d'aimants (422, 423, 424, 425, 426, 427) disposée sur une surface radialement externe du noyau de rotor (400) et espacée dans une direction circonférentielle, dans lequel le noyau de rotor (410) comprend une pluralité de rainures de logement (4182, 4183, 4184, 4185, 4186, 4187) dans lesquelles la pluralité d'aimants (422, 423, 424, 425, 426, 427) est respectivement logée, et une pluralité de saillies (412, 413, 414, 415, 416, 417) qui fait saillie radialement vers l'extérieur entre la pluralité de rainures de logement (4182, 4183, 4184, 4185, 4186, 4187),
dans lequel la saillie (412, 413, 414, 415, 416, 417) comprend à la fois les deux surfaces latérales (4124, 4125) s'étendant radialement vers l'extérieur et une surface périphérique externe (4121) reliant les deux surfaces latérales (4124, 4125) dans la direction circonférentielle,
dans lequel l'aimant (422, 423, 424, 425, 426, 427) comprend quatre surfaces s'étendant axialement, et les quatre surfaces comprennent une surface interne (4221, 4231) faisant face radialement vers l'intérieur, une surface externe (4223, 4233) disposée en face de la surface interne (4221, 4231) et faisant face à une surface périphérique externe du rotor (400), et deux surfaces latérales (4222, 4232) reliant la surface interne (4221, 4231) et la surface externe (4223, 4233),
dans lequel l'aimant (422, 423, 424, 425, 426, 427) est configuré pour glisser axialement entre des saillies adjacentes de la pluralité de saillies (412, 413, 414, 415, 416, 417), la surface interne (4221, 4231) de l'aimant (422, 423, 424, 425, 426, 427) est logée dans la rainure de logement (4182, 4183, 4184, 4185, 4186, 4187), et au moins une partie de la surface latérale (4222, 4232) de l'aimant (422, 423, 424, 425, 426, 427) est en contact avec une surface latérale (4124, 4125) de la saillie (412, 413, 414, 415, 416, 417),
dans lequel la surface latérale (4222, 4232) de l'aimant (422, 423, 424, 425, 426, 427) s'étend et fait saillie radialement vers l'extérieur davantage que la surface latérale (4124, 4125) de la saillie (412, 413, 414, 415, 416, 417), et un élément de fixation (430) est disposé dans au moins une zone partielle radialement à l'extérieur de la surface périphérique externe (4121) de la saillie (412, 413, 414, 415, 416, 417),
**caractérisé en ce que**
la surface périphérique externe (4121) de la saillie (412, 413, 414, 415, 416, 417) comprend une rainure (4128) formée concave radialement vers l'intérieur, et dans lequel une profondeur radiale de la rainure (4128) est égale ou inférieure à 0,1 mm.

2. Moteur de compresseur selon la revendication 1, dans lequel l'élément de fixation (430) est disposé, entre des surfaces latérales (4222, 4232) d'aimants adjacents de la pluralité d'aimants (422, 423, 424, 425, 426, 427), radialement plus à l'extérieur que la surface latérale (4124, 4125) de la saillie (412, 413, 414, 415, 416, 417).

3. Moteur de compresseur selon la revendication 1 ou 2, dans lequel la surface latérale (4222, 4232) de l'aimant (422, 423, 424, 425, 426, 427) et la saillie (412, 413, 414, 415, 416, 417) sont en contact en un point.

4. Moteur de compresseur selon la revendication 3, dans lequel une distance entre les deux surfaces latérales (4124, 4125) de la saillie (412, 413, 414, 415, 416, 417) diminue progressivement à mesure qu'elle se déplace radialement vers l'intérieur à partir d'une zone (P) en contact en ledit point, et une zone (S) entre la surface latérale (4124, 4125) de la saillie (412, 413, 414, 415, 416, 417) et la rainure de logement (4182, 4183, 4184, 4185, 4186, 4187) est formée concave,
dans lequel au moins une zone des deux surfaces latérales (4222, 4232) de l'aimant (422, 423, 424, 425, 426, 427) augmente progressivement à mesure qu'une distance entre les deux surfaces latérales (4222, 4232) se déplace radialement vers l'intérieur, et une zone entre la surface interne (4221, 4231) de l'aimant (422, 423, 424, 425, 426, 427) et les surfaces latérales (4222, 4232) de l'aimant (422, 423, 424, 425, 426, 427) est formée convexe vers l'extérieur, et
dans lequel une forme concave de la saillie (412, 413, 414, 415, 416, 417) et une forme convexe de l'aimant (422, 423, 424, 425, 426, 427) sont des formes qui se complètent.

5. Moteur de compresseur selon la revendication 3 ou 4, dans lequel une distance entre l'aimant (422, 423, 424, 425, 426, 427) et la saillie (412, 413, 414, 415, 416, 417) augmente à mesure que l'aimant (422, 423, 424, 425, 426, 427) et la saillie (412, 413, 414, 415, 416, 417) se déplacent radialement vers l'intérieur à partir d'une zone (P) en contact en ledit point.

6. Moteur de compresseur selon l'une quelconque des revendications 1 à 5, dans lequel une coupe axiale de l'aimant (422, 423, 424, 425, 426, 427) a une forme trapézoïdale, et
dans lequel une coupe axiale de la saillie (412, 413, 414, 415, 416, 417) a une forme trapézoïdale inversée.

7. Moteur de compresseur selon l'une quelconque des revendications 3 à 5, dans lequel les deux extrémités (4122, 4123) dans la direction circonférentielle de la surface périphérique externe (4121) de la saillie (412, 413, 414, 415, 416, 417) sont formées convexes vers l'extérieur dans la direction circonférentielle, et
dans lequel la surface latérale (4222, 4232) de l'aimant (422, 423, 424, 425, 426, 427) est en contact avec une partie convexe de la saillie (412, 413, 414, 415, 416, 417) audit point.

8. Moteur de compresseur selon la revendication 7, dans lequel une distance entre les deux surfaces latérales (4124, 4125) de la saillie (412, 413, 414, 415, 416, 417) diminue progressivement à mesure que la saillie (412, 413, 414, 415, 416, 417) se déplace radialement vers l'intérieur à partir des deux extrémités (4122, 4123) dans la direction circonférentielle.

9. Moteur de compresseur selon l'une quelconque des revendications 1 à 8, dans lequel une coupe axiale de la rainure (4128) présente une courbure.

10. Moteur de compresseur selon l'une quelconque des revendications 1 à 9, dans lequel la coupe axiale de la rainure (4128) présente au moins deux points d'inflexion.

11. Moteur de compresseur selon l'une quelconque des revendications 1 à 10, dans lequel un diamètre extérieur de l'élément de fixation (430) est supérieur à un diamètre extérieur de la saillie (412, 413, 414, 415, 416, 417) et est inférieur à un diamètre extérieur de l'aimant (422, 423, 424, 425, 426, 427).

12. Moteur de compresseur selon l'une quelconque des revendications 1 à 11, dans lequel une valeur obtenue en divisant une distance entre des aimants adjacents de la pluralité d'aimants (422, 423, 424, 425, 426, 427) par une valeur minimale d'une largeur de la saillie (412, 413, 414, 415, 416, 417) est comprise entre 1,14 et 1,29.
